# EUROPÄISCHE PATENTANMELDUNG

(11) **EP 1 285 686 A1**
(43) Veröffentlichungstag der Anmeldung: **26.02.2003**
(21) Anmeldenummer: 02013363.3
(22) Anmeldetag: 19.06.2002
(51) Int. Cl.: B01D 46/42, B60H 3/06

(54) **Verfahren und Vorrichtung zur Ermittlung des Verunreinigungszustands eines Filters**

(30) Priorität: 17.08.2001 DE 10140510
(71) Anmelder: Carl Freudenberg KG, 69469 Weinheim (DE)
(72) Erfinder: Reinhardt, Heinz, Dr., 68535 Edingen (DE); Malig, Christoph, 69469 Weinheim (DE); Borris, Richard, 64646 Heppenheim (DE)

(57) **Zusammenfassung**

Verfahren zur Standzeitüberwachung eines Filters (1) in einer mit einem Gebläse ausgestatteten Filteranlage, insbesondere eines Filters (1) in einer Klimaanlage eines Kraftfahrzeugs, wobei vorzugsweise bei jeder Inbetriebnahme der Anlage stromabwärts vom Filter (1) die aktuelle Luftgeschwindigkeit (21) mit einem Sensor (2, 20) gemessen und mit der Referenzluftgeschwindigkeit (R) aus dem unbeladenen Filter (1) verglichen und einem Service-Rechner übermittelt und/oder an einer Anzeige angezeigt wird und dass bei Unterschreitung eines vorgegebenen Grenzwertes bzw. Grenzbereichs der aktuellen Luftgeschwindigkeit (21) der Filterwechsel signalisiert wird.

## Beschreibung

### Technisches Gebiet

Die Erfindung befasst sich mit dem Problem der Standzeitüberwachung von Filtern. Durch die begrenzte Lüfterleistung an vielen Filteranlagen, insbesondere an Filtern in Klimaanlagen von Kraftfahrzeugen entsteht ein Abfall im Volumenstrom mit zunehmender Staubanlagerung am Filter. Es ist deshalb wünschenswert, wenn bei diesen Anlagen der Verstopfungsgrad des Filters gemessen werden kann, um den Filter rechtzeitig zu erneuern.

### Stand der Technik

Durch die DE 41 37 520 A1 ist eine Vorrichtung zum Erfassen des Grads der Verstopfung eines Staubfilters bekannt geworden. Hier werden wenigstens zwei Sensoren im Luftkanal angeordnet, die jeweils unterschiedlichen Abschnitten des Staubfilters entsprechen und elektrische Signale abgeben, welche die Luftgeschwindigkeit in den jeweiligen Bereichen des Luftkanals angeben. Die Geschwindigkeitsdifferenz, welche durch die Sensoren gemessen wird und in einem Kompensator verglichen wird, zeigt den gegebenen Grad der Verschmutzung im Staubfilter an. Um hier zu sicheren Ergebnissen zu kommen, werden unterschiedliche Einrichtungen in den Strömungskanal eingebaut, denen Sensoren zugeordnet werden, um einen Vergleich mit an anderen Stellen angeordneten Sensoren zu erreichen. Die Vorrichtung ist deshalb empfindlich, relativ aufwendig in der Herstellung und eignet sich deshalb nur für größere Filteranlagen. Außerdem kann der vor dem Filter angeordnete Sensor verschmutzen.

Eine andere Möglichkeit zur Überwachung des Verschmutzungsgrads eines in einem Luftstrom angeordneten Filters wird in der DE 41 01 739 A1 gezeigt. Hier ist parallel zum Weg des Luftstroms eine das Filter überbrückende Bypassleitung vorgesehen, in der ein auf Änderungen in der Strömungsgeschwindigkeit ansprechender Sensor als Messwertaufnehmer angeordnet ist, der bei Überschreitung einer bestimmten Strömungsgeschwindigkeit ein Anzeigesignal an einer Anzeigevorrichtung auslöst. Auch diese Vorrichtung ist relativ aufwendig und deshalb ebenfalls nur bei größeren Anlagen sinnvoll. Der Sensor wird mit ungefilterter Luft beaufschlagt und ist somit vor Verschmutzung nicht geschützt.

Eine in ihrem Aufbau einfache Möglichkeit zum Filtern von Luft, die auch bei Klimaanlagen für Kraftfahrzeuge eingesetzt werden kann, zeigt die EP 0 847 787 A1. Der verwendete Filter ist hier mit einem Netz von elektrisch leitenden Leitungen überzogen, wobei der elektrische Widerstand der Leitungen gemessen wird, wenn Luft durch den Filter strömt. Der elektrische Widerstand gibt ein Maß für die Durchflussmenge der Luft. Hieraus kann auf den Verstopfungsgrad geschlossen werden. Die Herstellungskosten sind hoch. Aufwendig ist seine Montage.

### Darstellung der Erfindung

Der Erfindung liegt die Aufgabe zugrunde, eine Standzeitüberwachung für einen Filter zu finden, die einfach in ihrer Ausgestaltung ist und eine sichere Aussage über den Verstopfungsgrad ermöglicht. Zur Lösung der gestellten Aufgabe wird ein Verfahren und eine Vorrichtung vorgeschlagen, mit der die Verstopfung eines Staubfilters in einer Filteranlage, insbesondere eines Staubfilters in einer Heizungs- und Klimaanlage eines Kraftfahrzeugs, gemessen werden kann.

Die Lösung der gestellten Aufgabe erfolgt erfindungsgemäß dadurch, dass vorzugsweise bei jeder Inbetriebnahme der Anlage stromabwärts vom Filter die aktuelle Luftgeschwindigkeit gemessen und mit der Referenzluftgeschwindigkeit aus dem unbeladenen Filter verglichen und einem Service-Rechner übermittelt und/oder an einer Anzeige angezeigt wird und dass bei Unterschreitung eines vorgegebenen Grenzwerts bzw. Grenzwertbereiches der aktuellen Luftgeschwindigkeit der Filterwechsel signalisiert wird. Bei jedem Einsetzen eines neuen Filters in die Anlage wird der Volumenstrom der Luft gemessen und auf diese Weise die Referenzluftgeschwindigkeit ermittelt. Hierfür wird die elektrische Spannung am Gebläse der Filteranlage auf einem vorgegebenen festen Wert eingestellt und der Luftstrom gemessen. Während des laufenden Betriebs werden keine weiteren Messungen vorgenommen. Bevorzugt wird erst bei einer der Außerbetriebsetzung folgenden erneuten Inbetriebnahme der Anlage die aktuelle Luftgeschwindigkeit wieder gemessen und diese mit der Referenzluftgeschwindigkeit des unbeladenen neuen Staubfilters verglichen und in einem Fahrzeug-Servicerechner gespeichert oder an einer Anzeige angezeigt. An der Anzeige kann der Verstopfungsgrad des Staubfilters abgelesen werden. Sobald der Verschmutzungsgrad einen vorgegebenen Grenzwert erreicht, indem die aktuelle Luftgeschwindigkeit auf einen Grenzwert abgesunken ist, wird signalisiert, dass der Filterwechsel durchzuführen ist.

Die gestellte Aufgabe wird außerdem durch ein Verfahren zur Standzeitüberwachung eines Filters gelöst, in einer mit einem Gebläse ausgestatteten Filteranlage, insbesondere eines Filters in einer Heizungs- und Klimaanlage eines Kraftfahrzeugs, wobei stromabwärts vom Filter die aktuelle Luftgeschwindigkeitsdifferenz mit einem Sensor gemessen und mit einer Referenzluftgeschwindigkeitsdifferenz aus dem unbeladenen Filter verglichen und einem Service-Rechner übermittelt und/oder an einer Anzeige angezeigt wird, wobei bei Unterschreitung eines vorgegebenen Differenzgrenzwerts bzw. Differenzgrenzbereichs der Filterwechsel signalisiert wird. Die Referenzluftgeschwindigkeitsdifferenz wird bei zwei vorgegebenen elektrischen Spannungen am Gebläse der Filteranlage gemessen. Bei einem solchen Verfahren ist von Vorteil, dass eine Überprüfung des Verschmutzungsgrads des Filters auch während des laufenden Betriebs möglich ist.

Hierfür kann der Sensor beispielsweise mit einer Warnlampe und/oder einem akustischen Warnsignal verbunden sein. Außerdem ist es günstig, insbesondere bei Kraftfahrzeugen, wenn der Sensor an einen Diagnosesystem einer Kraftfahrzeugwerkstätte anschließbar ist, so dass am Diagnosesystem der Verstopfungsgrad des Filters abgelesen werden kann. Der Sensor ist so ausgebildet, dass seine Signale in Abhängigkeit von der am Sensor vorhandenen Luftgeschwindigkeit ausgesendet werden.

Anstelle einer Messung bei jeder Inbetriebnahme der Filteranlage kann auch eine zyklische Messung vorgenommen werden, z.B. in Abhängigkeit von den Betriebszeiten der Anlage oder auch von der Kilometerleistung des Kraftfahrzeugs.

Die Vorrichtung zur Durchführung des Verfahrens zeichnet sich dadurch aus, dass stromabwärts vom Filter ein die Luftgeschwindigkeit der durch den Filter geleiteten Luftströmung messende Sensor angeordnet ist, der den Abfall der Luftgeschwindigkeit in Abhängigkeit vom Beladungszustand des Filters einem Service-Rechner und/oder einer Anzeige übermittelt. Dabei kann der Sensor am Filter selbst angebracht sein. Für diesen Fall ist es erforderlich, dass die Filterhalterung mit entsprechenden Aufnahmekontakten und der Filter selbst mit Anschlusskontakten versehen ist, die über Leitungen mit dem am Filter angebrachten Sensor in Verbindung stehen. Eine andere günstige Möglichkeit besteht darin, dass der oder die Sensoren an dem den auswechselbaren Filter aufnehmenden Halterahmen angebracht sind. In diesem Fall können die Filter wie bisher unverändert ausgeführt werden und in den entsprechenden Halterahmen oder Gehäuse für den Filter eingesetzt werden. Dies empfiehlt sich dann, wenn der Sensor kein Austauschartikel ist.

### Kurzbeschreibung der Zeichnung

In der Zeichnung sind mehrere Möglichkeiten zur Durchführung der Erfindung dargestellt.

Es zeigt:
- Fig. 1: die Anordnung eines Filters mit einem Sensor im Strömungskanal;
- Fig. 2: die Anordnung eines Filters im Strömungskanal mit einem Sensor am Halterahmen für den Filter;
- Fig. 3: eine andere Ausbildung eines am Halterahmen befestigten Sensors;
- Fig. 4: ein Diagramm zum Verlauf der Filterverstopfung in Abhängigkeit von der Sensorspannung und der Zeit bei einem Verfahren gemäß den Ansprüchen 1 und/oder 2;
- Fig. 5: ein Diagramm zum Verlauf der Filterverstopfung in Abhängigkeit von der Sensorspannung und der Zeit, entsprechend dem Verfahren nach den Ansprüchen 3 und/oder 4.

### Ausführung der Erfindung

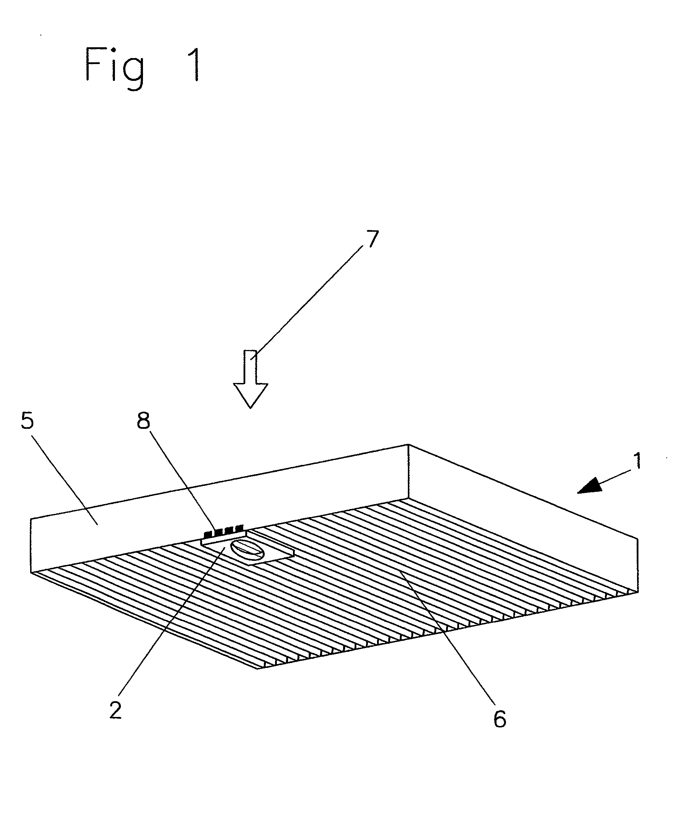

Die Fig. 1 zeigt in perspektivischer Darstellung einen rechteckigen Filter 1 aus einem Filterrahmen 5 und darin befindlichem zickzackförmig gefalteten Filtervlies 6. Mit dem Pfeil 7 ist die Strömungsrichtung der Luft während des Betriebs der Filteranlage angezeigt. Stromabwärts vom Staubfilter 1 ist der Sensor 2 angebracht, mit dem die Luftgeschwindigkeit der durch den Filter 1 strömenden Luft gemessen wird. Am Filterrahmen 5 sind elektrische Kontakte 8 angebracht, die beim Einsetzen des Filters 1 in ein Filtergehäuse 9 mit darin angebrachten elektrischen Kontakten verbunden werden. Über nicht näher gezeigte Leitungen wird eine Verbindung zu einem Service-Rechner oder einer optischen Anzeige hergestellt, an welcher die Daten des Sensors 2 angezeigt werden und abgelesen werden können. Eine solche Ausbildung eines Filters 1 mit unmittelbar daran angebrachtem Sensor 2 bietet sich an, wenn der Sensor 2 sehr kostengünstig herstellbar ist.

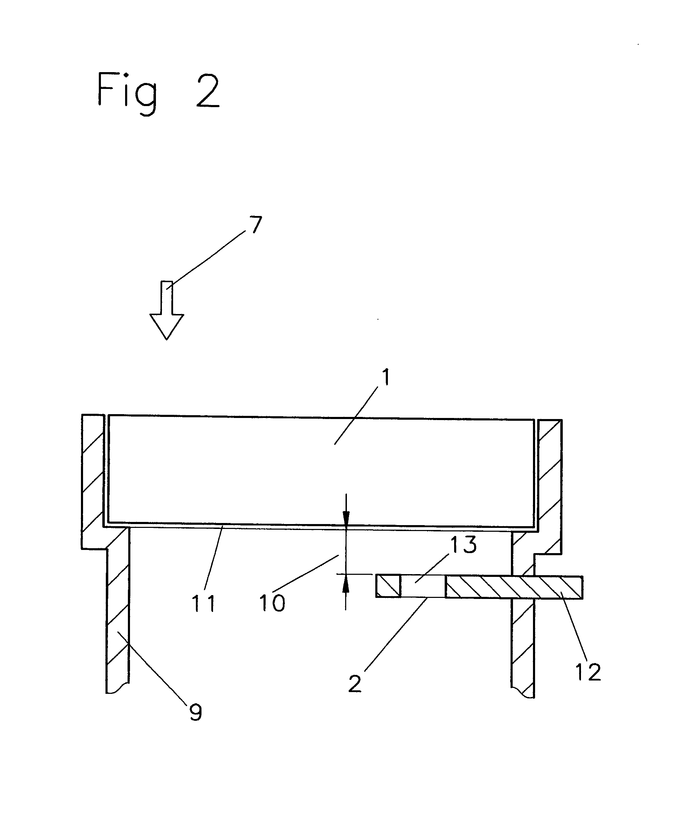

Eine andere Möglichkeit ist in der Fig. 2 gezeigt, bei der der Sensor 2 im Gehäuse 9 stromabwärts unterhalb des Filters 1 angebracht ist. In diesem Fall bleibt der Sensor 2 im Gehäuse 9 installiert und es wird lediglich der Filter 1 bei Erreichen eines Grenzwerts für die Verstopfung ausgewechselt. Der Abstand 10 des Sensors 2 von der Unterkante 11 des Filters 1 wird bei gängigen Autofiltern in der Größenordnung von 1 bis 20 mm gewählt. Durch diese relativ nahe Anordnung des Sensors 2 an der Unterkante 11 des Filters 1 wird eine gute Messung der Luftströmung erreicht. Der hierfür benutzte Sensor 2 ist einfachster Bauweise und besteht aus einer Platte 12 mit einer darin befindlichen runden Öffnung 13 im Strömungsweg. In der Öffnung 13 sind entsprechende Messdrähte angebracht, mit deren Hilfe die Luftströmung gemessen wird. An die Platte 12 schließen Leitungen an, über die die gemessenen Signale zu der nicht gezeigten Anzeige übermittelt werden.

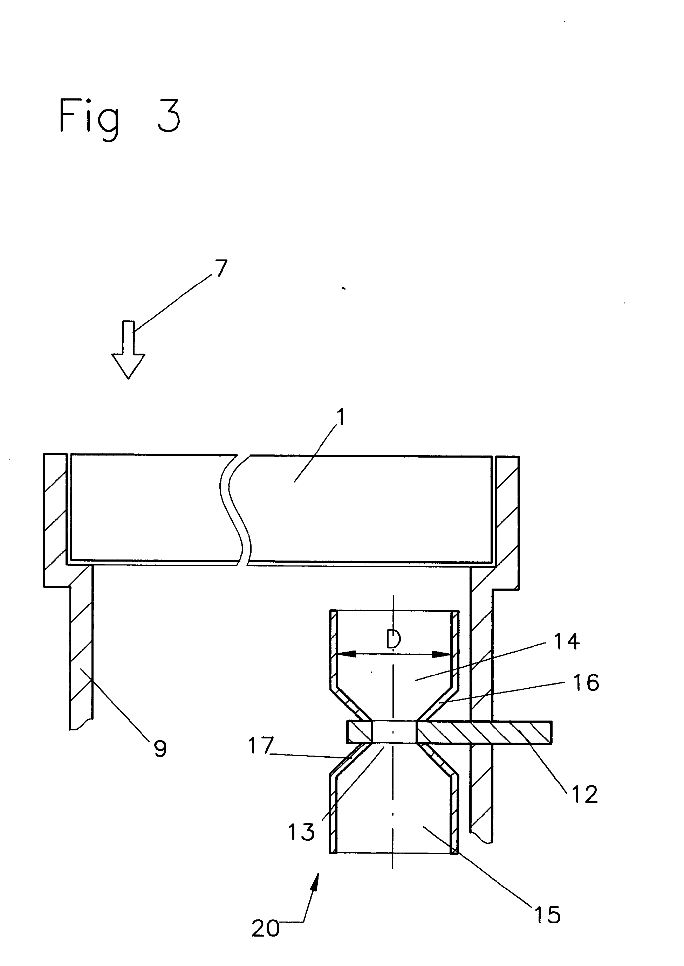

In der Fig. 3 ist eine andere Ausbildung eines Sensors 20 gezeigt, bei der zusätzlich zur Platte 12 ein Anströmrohr 14 und ein Abströmrohr 15 angebracht sind. Die Durchmesser D der Rohre 14 und 15 sind gleich. Zur Öffnung 13 hin, sind beide Rohre 14 und 15 mit konisch ausgestalteten Einsatzstücken 16 und 17 versehen. Ein solcher Sensor 20 erlaubt eine sehr gute Führung der Luftströmung und damit eine genaue Messung derselben.

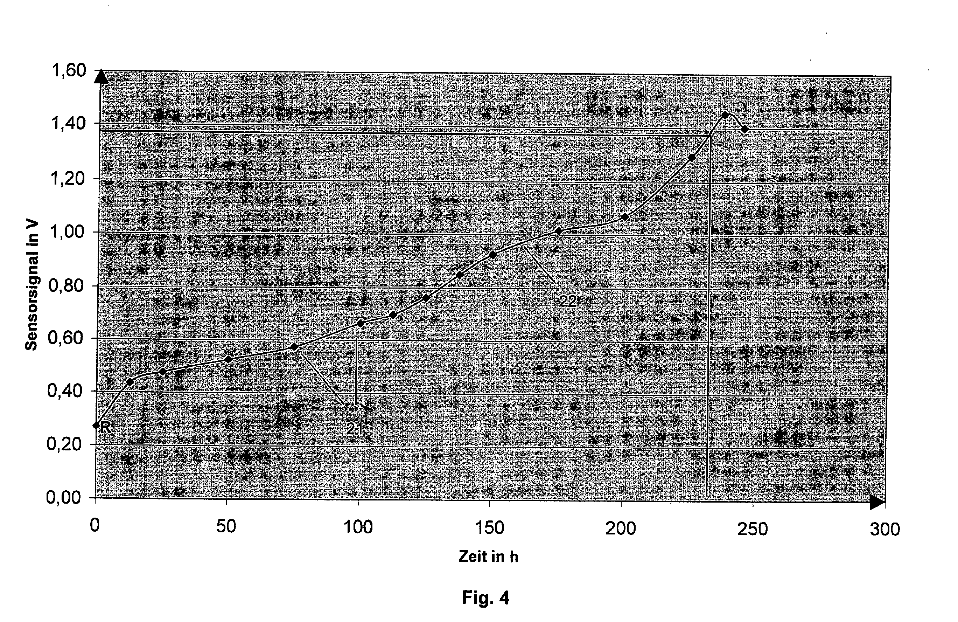

Die Fig. 4 zeigt ermittelte Messwerte als Spannungswerte, aufgetragen gegenüber der Zeit in Stunden. Bei Einsatz eines neuen Filters in die Filteranlage wird die Referenzluftgeschwindigkeit R im Zeitpunkt 0:0 gemessen. Dabei wird am Gebläse der Filteranlage eine elektrische Spannung von 4 V eingestellt. Die vom Sensor gemessene Spannung beträgt im vorliegenden Beispiel etwa 0,29 Volt. Es liegt ein Volumenstrom von ca. 300 m³/Std. vor. Die Druckdifferenz dieses neuen Filters, gemessen bei einem Referenzvolumenstrom von 180 m³/Std. beträgt etwa 30 Pascal. Mit zunehmendem Gebrauch wird der Volumenstrom geringer und das Sensorsignal erhöht sich. Die Messpunkte 21 führen zum Kurvenverlauf der Kurve 22 und zeigen den Verstopfungsgrad bei jeder erneuten Inbetriebnahme der Anlage an. Bei ca. 235 Std. hat der Volumenstrom einen Wert von 125 m³/Std. erreicht und das Sensorsignal hat einen Wert von 1,39 Volt. Die Druckdifferenz des Filters, gemessen bei 180 m³/Std., beträgt jetzt etwa 167 Pascal. Der Filter ist damit erschöpft und sollte ausgewechselt werden.

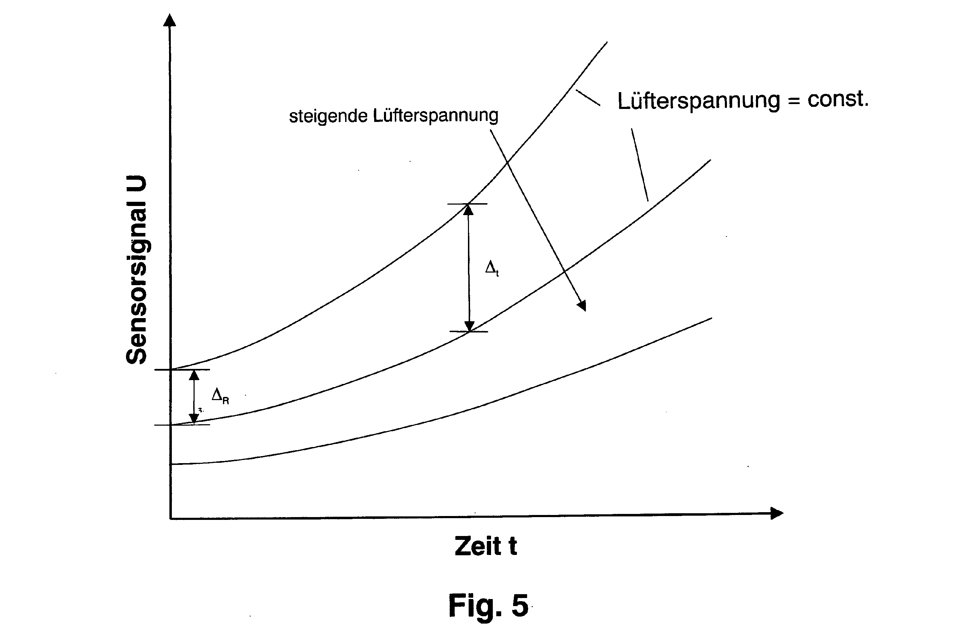

Fig. 5 zeigt ermittelte Messwerte als Spannungswerte, aufgetragen über der Zeit. Dabei wird die aktuelle Luftgeschwindigkeitsdifferenz ermittelt und mit der Referenzluftgeschwindigkeitsdifferenz R des unbeladenen Filters 1 verglichen. Bei Unterschreitung eines vorgegebenen Differenzgrenzwert bzw. Differenzgrenzbereichs wird der Filterwechsel signalisiert. Die Referenzluftgeschwindigkeitsdifferenz R wird bei zwei vorgegebenen elektrischen Spannungen am Gebläse der Filteranlage gemessen. Hierbei ist von Vorteil, dass eine Überprüfung des Beladungszustands des Filters problemlos im laufenden Betrieb erfolgen kann.

## Patentansprüche

1. Verfahren zur Standzeitüberwachung eines Filters (1) in einer mit einem Gebläse ausgestatteten Filteranlage, insbesondere eines Filters (1) in einer Heizungs- und Klimaanlage eines Kraftfahrzeugs, **dadurch gekennzeichnet, dass** vorzugsweise bei jeder Inbetriebnahme der Anlage stromabwärts vom Filter (1) die aktuelle Luftgeschwindigkeit (21) mit einem Sensor (2, 20) gemessen und mit der Referenzluftgeschwindigkeit (R) aus dem unbeladenen Filter (1) verglichen und einem Service-Rechner übermittelt und/oder an einer Anzeige angezeigt wird und dass bei Unterschreitung eines vorgegebenen Grenzwertes bzw. Grenzbereichs der aktuellen Luftgeschwindigkeit (21) der Filterwechsel signalisiert wird.

2. Verfahren nach Anspruch 1, **dadurch gekennzeichnet, dass** die Referenzluftgeschwindigkeit (R) bei einer vorgegebenen elektrischen Spannung am Gebläse der Filteranlage gemessen wird.

3. Verfahren zur Standzeitüberwachung eines Filters (1) in einer mit einem Gebläse ausgestatteten Filteranlage, insbesondere eines Filters (1) in einer Klimaanlage eines Kraftfahrzeugs, **dadurch gekennzeichnet, dass** stromabwärts vom Filter (1) die aktuelle Luftgeschwindigkeitsdifferenz (21) mit einem Sensor (2, 20) gemessen und mit einer Referenzluftgeschwindigkeitsdifferenz (R) aus dem unbeladenen Filter (1) verglichen und einem Service-Rechner übermittelt und/oder an einer Anzeige angezeigt wird und dass bei Unterschreitung eines vorgegebenen Differenzgrenzwerts bzw. Differenzgrenzbereichs der Filterwechsel signalisiert wird.

4. Verfahren nach Anspruch 3, **dadurch gekennzeichnet, dass** die Referenzluftgeschwindigkeitsdifferenz (R) bei zwei vorgegebenen elektrischen Spannungen am Gebläse der Filteranlage gemessen wird.

5. Verfahren nach einem der Ansprüche 1 bis 4, **dadurch gekennzeichnet, dass** der Sensor (2, 20) mit einer Warnlampe verbunden ist.

6. Verfahren nach einem der Ansprüche 1 bis 5, **dadurch gekennzeichnet, dass** der Sensor (2, 20) mit einem akustischen Warnsignal verbunden ist.

7. Verfahren nach einem der Ansprüche 1 bis 6, **dadurch gekennzeichnet, dass** der Sensor (2, 20) an den Service-Rechner des Kraftfahrzeugs oder an das Diagnose-System einer Kraftfahrzeugwerkstätte anschließbar ist.

8. Verfahren nach Anspruch 1 bis 7, **dadurch gekennzeichnet, dass** der Sensor (2, 20) Signale in Abhängigkeit von der am Sensor (2, 20) vorhandenen elektrischen Spannung erzeugt.

9. Vorrichtung zur Standzeitüberwachung eines Filters (1), insbesondere eines Filters (1) an einer mit einem Gebläse ausgestatteten Klimaanlage eines Kraftfahrzeugs, **dadurch gekennzeichnet, dass** stromabwärts vom Filter (1) ein die Luftgeschwindigkeit der durch den Filter (1) geleiteten Luftströmung messender Sensor (2, 20) angeordnet ist, der den Abfall der Luftgeschwindigkeit in Abhängigkeit vom Beladungszustand des Filters (1) einem Service-Rechner und/oder einer Anzeige übermittelt.

10. Vorrichtung nach Anspruch 9, **dadurch gekennzeichnet, dass** der Sensor (2) am Filter (1) angebracht ist.

11. Vorrichtung nach Anspruch 9, **dadurch gekennzeichnet, dass** der Sensor (2, 20) an dem den auswechselbaren Filter (1) aufnehmenden Gehäuse (9) angebracht ist.
